Europäisches Patentamt

European Patent Office

Office européen des brevets

(19)

(11) Numéro de publication: **0 281 859 B1**

# FASCICULE DE BREVET EUROPEEN

(12)

(45) Date de publication de fascicule du brevet:
18.09.91

(51) Int. Cl.⁵: **B60C 15/04**

(21) Numéro de dépôt: **88102789.0**

(22) Date de dépôt: **25.02.88**

(54) **Enveloppe de pneumatique comportant des tringles constituées chacune par un empilement de rubans de forme coudée.**

(30) Priorité: **12.03.87 FR 8703526**

(43) Date de publication de la demande:
**14.09.88 Bulletin 88/37**

(45) Mention de la délivrance du brevet:
**18.09.91 Bulletin 91/38**

(84) Etats contractants désignés:
**AT BE CH DE ES FR GB GR IT LI LU NL SE**

(56) Documents cités:
**FR-A- 1 363 074**
**FR-A- 1 380 138**
**FR-A- 2 466 357**
**US-A- 1 503 883**

(73) Titulaire: **COMPAGNIE GENERALE DES ETA-BLISSEMENTS MICHELIN-MICHELIN & CIE**
**4, rue du Terrall**
**F-63000 Clermont-Ferrand(FR)**

(72) Inventeur: **Charvet, Jean-Louis**
**25, rue Alfred de Musset**
**F-63000 Clermont-Ferrand(FR)**

(74) Mandataire: **Doussaint, Jean-Marie et al**
**MICHELIN & CIE Service K. Brevets**
**F-63040 Clermont-Ferrand Cedex(FR)**

**Description**

L'invention concerne les enveloppes de pneumatiques, et plus particulièrement le renforcement des bourrelets de ces enveloppes. Pour renforcer les bourrelets des enveloppes de pneumatiques, il est connu d'utiliser des tringles constituées par un empilement de rubans de forme coudée, ces tringles étant appelées "tringles tuilées" dans la suite du texte. Des tringles tuilées sont décrites par exemple dans les brevets ou demandes de brevets suivants : US-A-1 503 883 ; US-A-1 527 700 ; FR-A-698 304 ; FR-A-1 363 074 (correspondant au préambule de la revendication 1); FR-A-2 466 357 ; demande de brevet japonais publiée après examen sous le n° JP-B-52-1524.

Ces tringles sont réalisées par simple enroulement d'un ruban de forme coudée donnant une imbrication qui stabilise les spires les unes par rapport aux autres, ce qui limite le nombre de colliers de serrage, de telle sorte que ces tringles sont très économiques à réaliser.

Les enveloppes renforcées avec de telles tringles tuilées sont destinées parfois à être montées sur des jantes qui comportent des bossages circonférentiels servant de butées, un tel bossage étant aussi appelé "hump" dans l'industrie des pneumatiques. Lorsque les enveloppes à tringles tuilées sont montées sur ces jantes, chaque bourrelet est disposé entre un bossage et un crochet de jante, et l'expérience montre que ces enveloppes présentent alors les inconvénients suivants :
- montage et démontage difficiles ;
- décoincement rapide de l'enveloppe lors d'un roulage à plat, le bourrelet de l'enveloppe franchissant alors facilement le bossage pour se positionner dans le creux de la jante, ce qui pose des problèmes graves de sécurité.

Le but de l'invention est d'éviter ces inconvénients.

En conséquence, l'invention concerne une enveloppe de pneumatique montée sur une jante, cette enveloppe comportant des bourrelets qui sont renforcés chacun avec au moins une tringle constituée par un empilement de rubans de forme coudée, la concavité des rubans étant disposée vers l'axe de rotation de l'enveloppe, caractérisée en ce qu'en section radiale, la droite joignant les extrémités d'un ruban quelconque fait avec l'axe de rotation de l'enveloppe un angle aigu $\alpha$ tel que l'on ait la relation $\alpha \geq \beta + 5$, si $\beta$ est positif et tel que l'on ait la relation $\alpha \geq 5$ si $\beta$ est négatif, $\beta$ étant l'angle du siège de la jante, $\alpha$ et $\beta$ étant exprimés en degrés, l'extrémité du ruban disposée axialement vers l'intérieur de l'enveloppe étant plus proche de l'axe de rotation de l'enveloppe que l'extrémité de ce ruban disposée axialement vers l'extérieur de l'enveloppe.

L'invention sera aisément comprise à l'aide des exemples non limitatifs qui suivent et des figures toutes schématiques relatives à ces exemples.

Sur le dessin :
- la figure 1 représente en coupe radiale une enveloppe de pneumatique conforme à l'invention, avec deux bourrelets ;
- la figure 2 représente en coupe radiale un bourrelet de l'enveloppe représentée à la figure 1, ce bourrelet comportant une tringle constituée par un empilement de rubans de forme coudée ;
- la figure 3 représente en coupe radiale un ruban à forme coudée de la tringle représentée à la figure 2.

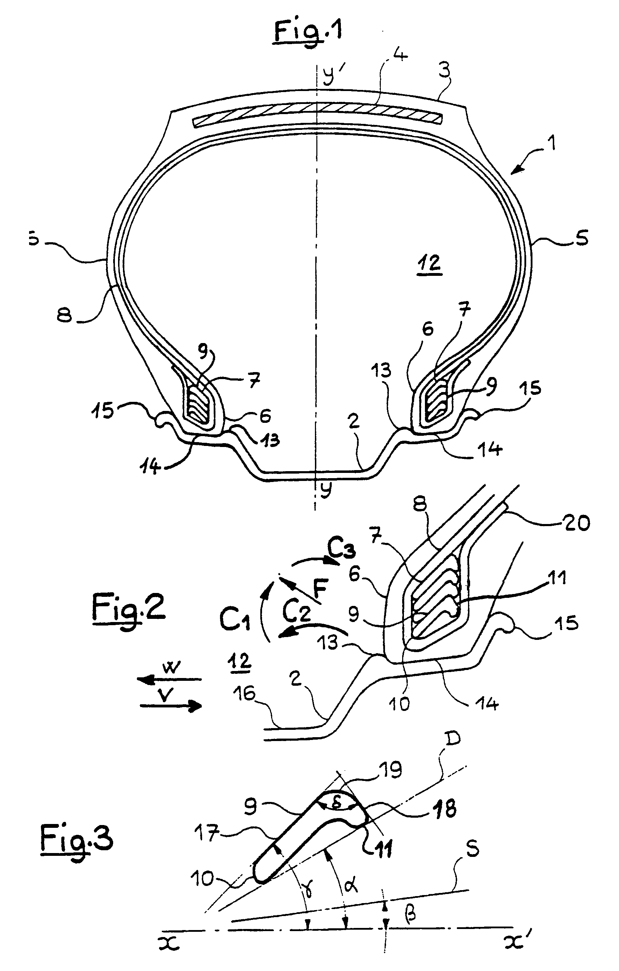

La figure 1 représente en coupe radiale une enveloppe de pneumatique 1 conforme à l'invention montée sur une jante 2 connue. L'enveloppe 1 comporte un sommet 3, renforcé de façon connue par une armature 4, deux flancs 5 et deux bourrelets 6. Chaque bourrelet 6 est renforcé par une tringle 7. Une nappe carcasse 8 est disposée d'un bourrelet 6 à l'autre en s'enroulant autour de chaque tringle 7 de façon à obtenir un ancrage.

Un bourrelet 6 est représenté plus en détail en section radiale à la figure 2 avec la portion de jante 2 correspondant à ce bourrelet. La tringle 7 est une tringle dite "tuilée" constituée par un empilement de rubans 9 de forme coudée, cet empilement étant obtenu par exemple en enroulant plusieurs spires d'une bande continue de forme coudée, chaque ruban 9 correspondant alors à une spire. Ces rubans 9 sont emboités les uns dans les autres. Un de ces rubans 9 est représenté plus en détail en coupe radiale à la figure 3. La concavité des rubans 9 est disposée vers l'axe de rotation de l'enveloppe 1, cet axe étant représenté par la droite xx' à la figure 3.

En section radiale, chaque ruban 9 comporte deux extrémités, une extrémité 10 disposée vers l'intérieur de l'enveloppe 1, c'est-à-dire vers la cavité 12 définie par l'enveloppe 1 et la jante 2, et une extrémité 11 disposée vers l'extérieur de l'enveloppe 1. Pour la simplicité du dessin, les extrémités 10 et 11 ne sont indiqués que pour un ruban 9 à la figure 2. A la figure 3 est représentée la droite D tangente aux extrémités 10 et 11 du ruban 9 de cette figure. Cette droite D fait l'angle aigu $\alpha$ avec l'axe xx'. L'extrémité intérieure 10 est plus proche de l'axe xx' que l'extrémité extérieure 11, c'est-à-dire que l'angle $\alpha$ s'ouvre vers l'extérieur de l'enveloppe 1 lorsqu'on se déplace de l'extrémité 10 vers l'extrémité 11.

L'enveloppe 1 et la jante 2 comportent un même plan équatorial perpendiculaire à l'axe xx', ce plan équatorial étant représenté par la ligne yy' à la figure 1. De chaque côté du plan équatorial, la jante 2 présente, du côté de l'enveloppe 1, un bossage circonférentiel 13 servant de butée, un siège 14 et un crochet de jante 15. Chaque bourrelet 6 est disposé entre un bossage 13 et un crochet de jante 15 et il s'applique sur la jante en épousant la surface du siège 14. En section radiale cette surface de siège 14 est une droite, une telle droite S étant représentée à la figure 3 pour le siège 14 correspondant au ruban 9 de cette figure. La droite S fait l'angle $\beta$, dit "angle de siège", avec l'axe xx'. L'angle $\beta$ est dit positif si le siège 14 s'écarte de l'axe xx' lorsqu'on s'éloigne du plan équatorial yy' et inversement l'angle $\beta$ est dit négatif si le siège 14 se rapproche de l'axe xx' lorsqu'on s'éloigne du plan équatorial yy'. L'angle $\beta$ correspondant aux figures 1 à 3 est positif. Conformément à l'invention on a la relation $\alpha \geq \beta + 5$, si $\beta$ est positif, et on a la relation $\alpha \geq 5$ si $\beta$ est négatif, $\alpha$ et $\beta$ étant exprimés en degrés.

L'enveloppe 1 présente les avantages suivants, grace à la disposition de la tringle 7 précédemment décrite.

- Au cours du montage de l'enveloppe 1, le bourrelet 6 se déplace dans le sens de la flèche V pour franchir le bossage 13 de façon à se placer sur la surface de siège 14 ; lors de cette opération, l'extrémité extérieure 11 franchit d'abord aisément le bossage 13 grâce à l'angle $\alpha$ ; ensuite l'extrémité intérieure 10 arrive au voisinage du bossage 13 qu'elle franchit à son tour, grâce à une rotation de la tringle 7 sur elle-même ; cette rotation correspond à un éloignement de l'extrémité intérieure 10, par rapport à l'axe xx'; cette rotation qui est schématisée par la flèche $C_1$ à la figure 2, est rendue aisée parce que l'extrémité extérieure 11 a la possibilité de se rapprocher de l'axe xx'. Ceci permet au bourrelet 6 de prendre facilement sa place au montage entre le bossage 13 et le crochet de jante 15.

- Au cours du démontage, on applique on outil de démontage entre le bourrelet 6 et le crochet de jante 15, cet outil n'étant pas représenté sur le dessin dans un but de simplification. En appuyant sur cet outil de démontage, on exerce une force schématisée par la flèche F à la figure 2. La tringle 7 n'oppose qu'une faible résistance à cette force F de telle sorte que le bourrelet 6 franchit facilement le bossage 13 en se dirigeant vers le plan équatorial yy', c'est-à-dire que le démontage est facile, parce qu'il n'y a pas de rotation de la tringle 7 sur elle-même, mais une légère augmentation de son développement, grâce à son élasticité, comme pour une tringle classique.

- En virage, lorsque la pression de l'enveloppe est anormalement basse, par exemple à la suite d'une crevaison, la poussée de dérive due au virage exerce sur le bourrelet 6, disposé vers l'extérieur du virage, un couple de basculement, ce couple étant représenté par la flèche $C_2$ à la figure 2. Ce couple $C_2$ tend à faire franchir le bossage 13 par le bourrelet 6, dans le sens de la flèche W. Lorsque le bourrelet 6 pénètre ainsi dans le creux de jante 16 il y a perte de contrôle du véhicule. Grâce à l'invention, la tringle 7 provoque la formation d'un couple résistant, schématisé par la flèche $C_3$ à la figure 2. Ce couple $C_3$ est dû au fait que les extrémités intérieures 10 s'appliquent contre le siège 14 et provoquent un verrouillage du bourrelet 6. Ce couple $C_3$ s'oppose au couple $C_2$, c'est-à-dire que ce couple $C_3$ résistant joue un rôle qui évite le décoincement de l'enveloppe 1.

Il est surprenant de constater que l'enveloppe 1 conforme à l'invention permet de remplir deux fonctions opposées : d'une part elle permet un montage et un démontage rapide sur la jante 2, d'autre part elle rend difficile un décoincement, lors d'une chute de pression brutale en roulage, ce qui rend l'enveloppe 1 plus sûre.

Le terme "ruban de forme coudée" est très général et couvre par exemple les réalisations où, en section radiale, les rubans 9 présentent une courbure répartie sur une grande partie ou la totalité de cette section, ainsi que les exemples de réalisation où cette section présente deux parties pratiquement rectilignes formant entre elles un angle, la courbure étant alors localisée à l'endroit où ces parties se rejoignent.

De préférence cette forme coudée est obtenue en pliant une bande de section transversale rectiligne, mais on peut envisager d'autres exemples de réalisation, la forme coudée étant obtenue par exemple lors d'un laminage. Le ruban 9 représenté à la figure 3 présente par exemple deux parties pratiquement rectilignes 17, 18 réunies par une partie courbée localisée 19. La partie rectiligne intérieure 17 fait l'angle $\gamma$ avec l'axe xx'. L'angle $\gamma$ est situé du même côté de l'axe xx' que l'angle $\alpha$, c'est-à-dire que la partie 17 s'éloigne de l'axe xx' lorsqu'on s'éloigne du plan équatorial yy', et l'angle $\gamma$ est supérieur à l'angle $\alpha$.

La partie 18 constitue la partie extérieure du ruban 9, et elle se termine par l'extrémité extérieure 11, la partie intérieure 17 se terminant par l'extrémité intérieure 10. Les parties 17, 18 définissent l'angle $\delta$, cet angle $\delta$ étant orienté vers l'axe xx' puisqu'il correspond à la concavité du ruban 9.

A titre d'exemple, le ruban 9 représenté à la figure 3 présente, en section radiale, une forme asymétrique, la partie intérieure 17 étant plus longue que la partie extérieure 18.

Il est possible de choisir les angles $\gamma$ et $\delta$ de

telle sorte que l'invention présente les avantages supplémentaires suivants :

- on peut choisir l'angle γ pour que la partie intérieure 17 du ruban 9 le plus éloigné de l'axe xx' soit pratiquement tangente à la courbe d'équilibre de la nappe carcasse 8, au voisinage de la tringle 7 ou pratiquement parallèle à la tangente à cette courbe d'équilibre à ce voisinage, ce qui permet à la nappe carcasse 8 de s'appliquer sur une portion importante de la partie 17 et donc d'assurer une bonne continuité du profil de la nappe carcasse 8 ;

- on peut choisir l'angle δ de telle sorte que chaque retournement de nappe carcasse 20 s'applique sur la nappe carcasse 8 sans qu'il soit nécessaire de prévoir un bourrage de gomme entre la nappe carcasse 8 et chaque retournement 20, la nappe carcasse 8 et ce retournement 20 entourant ainsi étroitement la tringle 7 correspondante. Le contact entre la nappe carcasse 8 et la tringle 7 peut se faire directement ou par l'intermédiaire d'une couche de gomme.

Bien entendu l'invention n'est pas limitée aux exemples de réalisation précédemment décrits. C'est ainsi par exemple que l'enveloppe conforme à l'invention peut comporter plusieurs nappes de carcasse, et que chaque bourrelet peut comporter plusieurs tringles.

## Revendications

1. Enveloppe de pneumatique montée sur une jante, cette enveloppe comportant des bourrelets qui sont renforcés chacun avec au moins une tringle constituée par un empilement de rubans de forme coudée, la concavité des rubans étant disposée vers l'axe de rotation de l'enveloppe, caractérisée en ce qu'en section radiale, la droite joignant les extrémités d'un ruban quelconque fait avec l'axe de rotation de l'enveloppe un angle aigu α tel que l'on ait la relation α ≥ β + 5, si β est positif et tel que l'on ait la relation α ≥ 5 si β est négatif, β étant l'angle du siège de la jante, α et β étant exprimés en degrés, l'extrémité du ruban disposée axialement vers l'intérieur de l'enveloppe étant plus proche de l'axe de rotation de l'enveloppe que l'extrémité de ce ruban disposée axialement vers l'extérieur de l'enveloppe.

2. Enveloppe de pneumatique selon la revendication 1 caractérisée en ce qu'elle comporte au moins une nappe carcasse disposée d'un bourrelet à l'autre en s'enroulant autour des tringles, caractérisée en ce que la partie intérieure du ruban le plus éloigné de l'axe de rotation de l'enveloppe est pratiquement tangente à la courbe d'équilibre de la nappe carcasse, au voisinage de la tringle, ou pratiquement parallèle à la tangente à cette courbe d'équilibre à ce voisinage, la nappe carcasse s'appliquant sur une portion importante de cette partie.

3. Enveloppe de pneumatique selon la revendication 2, caractérisée en ce que la nappe carcasse forme des retournements de carcasse, et chaque retournement s'applique sur la nappe carcasse sans qu'il y ait de bourrage de gomme entre la nappe carcasse et chacun de ces retournements.

## Claims

1. A pneumatic tyre mounted on a rim, this tyre having beads which are each reinforced by at least one bead ring formed of a stack of ribbons of curved shape, the concavity of the ribbons facing the axis of rotation of the tyre, characterised in that in radial section, the straight line joining the ends of any ribbon forms with the axis of rotation of the tyre an acute angle α such that α ≥ β + 5 if β is positive, and such that α ≥ 5 if β is negative, β being the angle of the bead seat of the rim, α and β being expressed in degrees, the end of the ribbon arranged axially towards the inside of the tyre being closer to the axis of rotation of the tyre than the end of this ribbon arranged axially towards the outside of the tyre.

2. A pneumatic tyre according to Claim 1, characterised in that it has at least one carcass ply extending from one bead to the other and winding around the bead rings, characterised in that the inner part of the ribbon which is furthest away from the axis of rotation of the tyre is practically tangent to the equilibrium curve of the carcass ply, in the vicinity of the bead ring, or practically parallel to the tangent to this equilibrium curve in this vicinity, the carcass ply applying itself against a large portion of this part.

3. A pneumatic tyre according to Claim 2, characterised in that the carcass ply forms carcass turn-overs, and each turn-over applies itself against the carcass ply without rubber packing between the carcass ply and each of these turn-overs.

## Patentansprüche

1. Auf einer Felge montierte Luftreifenhülle, die Wülste aufweist, die jeweils mit zumindest einem Kern verstärkt sind, der aus einem Stapel geknickter Bänder besteht, wobei die konkave Seite der Bänder zur Drehachse der Luftreifenhülle gerichtet ist, dadurch gekennzeichnet, daß im Radialschnitt die Gerade, die die Enden eines jeden Bandes verbindet, mit der Drehachse der Hülle einen spitzen Winkel $\alpha$ so bildet, daß man die Relation $\alpha \geq \beta + 5$ hat, wenn $\beta$ positiv ist und die Relation $\alpha \geq 5$, wenn $\beta$ negativ ist, $\beta$ ist dabei der Winkel des Felgensitzes, $\alpha$ und $\beta$ sind in Grad ausgedrückt, das axial ins Innere der Hülle gerichtete Ende des Bandes liegt der Rotationsachse der Hülle näher als das axial ins Äußere der Hülle gerichtete Ende des Bandes.

2. Luftreifenhülle nach Anspruch 1, dadurch gekennzeichnet, daß sie zumindest eine Karkassenlage aufweist, die von einem Wulst zum anderen reicht und um die Kerne geschlungen ist, dadurch gekennzeichnet, daß der innere Teil des Bandes, der von der Drehachse der Hülle am weitesten entfernt ist, praktisch eine Tangente an die Gleichgewichtskurve der Karkassenlage in der Nachbarschaft des Kernes ist oder praktisch parallel an die Tangente an diese Gleichgewichtskurve in diesem Bereich, die Karkassenlage legt sich über einen großen Teil dieses Teiles an.

3. Luftreifenhülle nach Anspruch 2, dadurch gekennzeichnet, daß die Karkassenlage Umschläge bildet, und daß jeder Umschlag sich an die Karkassenlage legt, ohne daß ein Gummistopfen zwischen der Karkassenlage und jedem dieser Umschläge angeordnet ist.

Fig.1

Fig.2

Fig.3